# EUROPÄISCHE PATENTSCHRIFT

(11) **EP 1 047 145 B1**
(45) Veröffentlichungstag und Bekanntmachung des Hinweises auf die Patenterteilung: **26.07.2006**
(21) Anmeldenummer: 00103213.5
(22) Anmeldetag: 17.02.2000
(51) Int. Cl.: H01M 10/42, H01M 2/16

(54) **Verfahren zur Herstellung einer sekundären Lithium-Zelle mit einem wärmeempfindlichen Schutzmechanismus**
Process for making secondary lithium element with heat-sensitive protective element
Procédé de fabrication d'un élément secondaire au lithium à élément protecteur sensible à la chaleur

(30) Priorität: 22.04.1999 DE 19918109
(43) Veröffentlichungstag der Anmeldung: 25.10.2000
(73) Patentinhaber: VARTA Automotive Systems GmbH, 30419 Hannover (DE)
(72) Erfinder: Ullrich, Matthias, Dr., 65779 Kelkheim (DE); Bechthold, Dieter, 61118 Bad Vilbel (DE); Rabenstein, Heinrich, 65931 Frankfurt (DE); Brohm, Thomas, Dr., 64589 Eppertshausen (DE)
(74) Vertreter: Lins, Edgar

(56) Entgegenhaltungen:
- EP-A- 0 246 866
- EP-A- 0 634 802
- GB-A- 1 148 852
- US-A- 5 091 272
- US-A- 5 837 015
- PATENT ABSTRACTS OF JAPAN vol. 1995, no. 08, 29. September 1995 (1995-09-29) & JP 07 130349 A (SONY CORP), 19. Mai 1995 (1995-05-19)
- PATENT ABSTRACTS OF JAPAN vol. 009, no. 106 (E-313), 10. Mai 1985 (1985-05-10) & JP 60 000052 A (FUJI DENKI KAGAKU KK), 5. Januar 1985 (1985-01-05)

## Beschreibung

Die Erfindung betrifft ein Verfahren zur Herstellung einer sekundären Lithium-Zelle, die mindestens eine kohlenstoffhaltige negative Elektrode, mindestens eine Lithium interkallerende positive Elektrode, mindestens einen zwischen positiver und negativer Elektrode angeordneten Separator sowie einen nichtwäßrigen, Lithium-ionen leitenden Elektrolyten besitzt.
Die Erfindung betrifft ferner eine sekundäre Lithium-Zelle.

Elektrochemische Zellen, die ein hohes Energiespeichervermögen besten, benötigen Sicherheitsvorkehrungen, die z.B. im Falle von Kurzschlüssen einen Schutz vor der spontanen Freisetzung der in ihnen gespeicherten Energie bieten. Zu diesem Zweck wurde bereits vorgeschlagen, einen wärmesensitiven Schutzmechanismus in die Lithium-lonen-Zellen zu integrieren, der ab einer vorgegebenen Zellentemperatur den Ionenfluß in der Zelle unterbinden oder zumindest erhebfich einschränken soll.

Dokument US-A 4,075,400 offenbart einen Separator, der ein die elektrochemische Zellenreaktion vergiftendes Mittel enthält, das in ein temperatursensitives Material eingebettet ist und ab einer vorgegebenen Temperatur freigesetzt wird.

Die Dokumente US-A 4,650,730 und 4,731,304 offenbaren Separatoren, die aus zwei mikroporösen Schichten mit unterschiedlichenSchmelzpunkten bestehen. Beim Erreichen des Schmelzpunktes des niedrig schmelzenden Materials verliert dieses serine : poröse Struktur und reduziert dadurch den lonenfluß in der Zelle.

Dokument US-A 4,741,979 beschreibt einen Separator, der aus wachsbeschichteten Fasern hergestellt ist. Das Wachs soll ab einer vorgegebenen Tem- ; peratur schmelzen und die Poren zwischen den Fasern verschließen.

Aus dem Dokument US-A 5,091,272 ist weiterhin ein Separator für elektrochemische Zellen bekannt, bei dem Polymerpartikel mit einer vorgegebenen Schmelztemperatur auf den Separator aufgebracht werden. Das Aufbringen der Polymerteilchen erfolgt danach aus einer Dispersion der Polymerteilchen in einem niedrig siedenden Lösungsmittel. Ca. 1 bis 15 µm große Teilchen werden in Schichtdicken von ca. 25 µm unter Zuhilfenahme von Bindemitteln auf den Separator aufgebracht. Allerdings verlangt die Aufbringung aus einem niedrig siedenden Lösemittel aus Umweltschutzgründen einen hohen apparativen Aufwand zum Entfemen der Lösemitteldämpfe aus der Abluft, und die in der Zelle verbleibenden Bindemittel können sich ungünstig auf die elektrochemischen Reaktionen der Zelle auswirken.

Die Erfindung hat sich die Aufgabe gestellt, ein Verfahren anzugeben, die Herstellung von elektrochemischen Zellen mit einem wärmeempfindlichen Schutzmechanismus zu vereinfachen, einen Eintrag von Materialien zu vermeiden, die die Elektrochemie im Normalbetrieb beeinflussen, und die Ansprechzeiten zur Aktivierung der Unterbrechung deslonenflusses in der elektrochemischen Zelle zu verkürzen.

Die Erfindung bezieht sich insbesondere auf Lithium-Ionen-Batterien, die kohlenstoffhaltige negative Elektroden besitzen.

Erfindungsgemäß wird die Aufgabe durch ein Verfahren zur Herstellung einer sekundären Lithium-Zelle mit einem wärmeempfindlichen Schutzmechanis-mus mit den Merkmalen des Patentanspruchs 1 gelöst.

Das erfindungsgemäße Verfahren gestattet es in einfacher Weise, die Oberfläche der Elektroden und/oder des Separators mit Wachstellchen zu beschichten, ohne die für den lanentransport notwendige Porosität der Elektroden und/oder des Separators merklich einzuschränken.

Vorteilhafterweise werden Wachse eingesetzt, die aus einem Gemisch von Wachsen mit unterswhiedllchen Schmelzpunkten bestehen. Der niedrig schmelzende Anteil der Wachse hat dabei vorteilhafter weise eine Schmelztemperatur im Bereich von 60 bis 90°C.

Die erfindungsgemäß aufgebrachten Wachsteilchen werden auf der Oberfläche der Elektroden und/oder des Separators vorzugsweise durch eine Lagerung bei der Erweichungstemperatur des niedrig schmelzenden Anteils angesintert.

Bevorzugt werden als Wachse Polyolefinwachse, Insbesondere Polyethylenwachse, eingesetzt

Die erfindungsgemäß erhaltenen Zellen sind durch den Verzicht auf ein zusätzliches Bindemittel hinsichtlich ihrer Elektrochemie unverändert und zeigen gegenüber bekannten Zellen mit einem Separator aus mehreren Polypropylen- und Polyethylenschichten ein verkürztes Ansprechverhalten bzw. eine Verbesserung der Temperaturbegrenzung im Falle eines inneren oder äußeren Kurzschlusses. Gegenüber Zellen mit Separatoren, die eine aus Lösemitteln aufgebrachte Wachsschicht aufweisen, besitzen die nach dem ertindungsgemäßen Verfahren hergesteilten Zellen eine deutlich verbesserte Zyklenlebensdauer.
Die oben erwähnte Aufgabe wird ferner mit einer sekundären Lithium-Zelle mit den Merkmalen des Patentanspruchs 6 gelöst.

Die Erfindung wird nachfolgend an einem Beispiel und zwei Vergleichsbeisplelen näher erläutert.

Es zeigen:
- Figur 1:: Strom (durchgezogene Linie) und Span nung (gestrichelte Linie) während eines externen Kurzschlusses an einer prismetischen 60 Ah Uthium Ion Zelle mit einem kommerziellen Shutdown-Separator (Celgard 2300, Hoechst Celanese Corp.).
- Figur 2:: Strom (durchgezogene Linie) und Spannung (gestrichelte Linie) während eines externen Kurzschlusses an einer prismatischen 60 Ah Lithium Ion Zelle mit erfindungsgemäß wachsbeschichteten Elektroden und einem kommerziellen Separator (Celgard 2502, Hoechst Celanese).
- Figur 3:: Temperatur am Zellengefäß (durchgezogene Linie) und am Minuspol der Zelle (gestrichelte Linie) während eines externen Kurzschlusses an einer prismatischen 60 Ah Lithium Ion Zelle mit einem kommerziellen Shutdown-Separator (Celgard 2300, Hoechst Celanese Corp.).
- Figur 4:: Temperatur am Zellengefäß (durchgezogene Linie) und am Minuspol der Zelle (gestrichelte Linie) während eines externen Kurzschlusses an einer prismatischen 60 Ah Lithium Ion Zelle mit wachsbeschichteten Elektroden und einem kommerziellen Separator (Celgard 2502, Hoechst Celanese).
- Figur 5:: Vergleich der Zyklenlebensdauer einer prismatischen 60 Ah Lithium Ion Zelle mit erfindungsgemäß wachsbeschichteten Elektroden und einem kommerziellen Separator (-▲-) und prismatischen 60 Ah Lithium Ion Zellen, die einen Separator enthalten, der mit einem bindemittelhaltigen Wachs in einem Lösemittel beschichtet wurde (-●-).

### Beispiel

Zum Aufbringen der Wachsteilchen werden negative Elektroden metallisch leitend aufgehängt und mit einem Pol einer Gleichspannungsquelle einer Pulverbeschichtungsanlage kontaktiert.

Das aufzubringende pulverförmige Wachs mit einem Erweichungsbeginn bei etwa 88°C und einem vom Hersteller angegebenen Schmelzpunkt von etwa 113°C wird in dieser Anlage mit einem unter Druck stehenden Gas (vorzugsweise Preßluft) weitgehend homogen vermischt (fluidisiert) und über eine Sprühpistole auf die Elektroden gesprüht. Die Sprühpistole ist mit dem anderen Pol der Gleichspannungsquelle verbunden und verursacht so eine statische Aufladung der Pulverteilchen. Der Spannungsunterschied von im allgemeinen 30 kV bis 100 kV sorgt für eine gerichtete Hinführung und ein gutes Anhaften der Pulverteilchen auf den Elektroden.

Um die Elektroden bei der Verarbeitung handhaben zu können ohne die Pulverschicht zu zerstören, werden die frisch beschichteten Elektroden in einem Sinterofen bei einer Temperatur von etwa 90°C für ca. 10 Minuten behandelt.

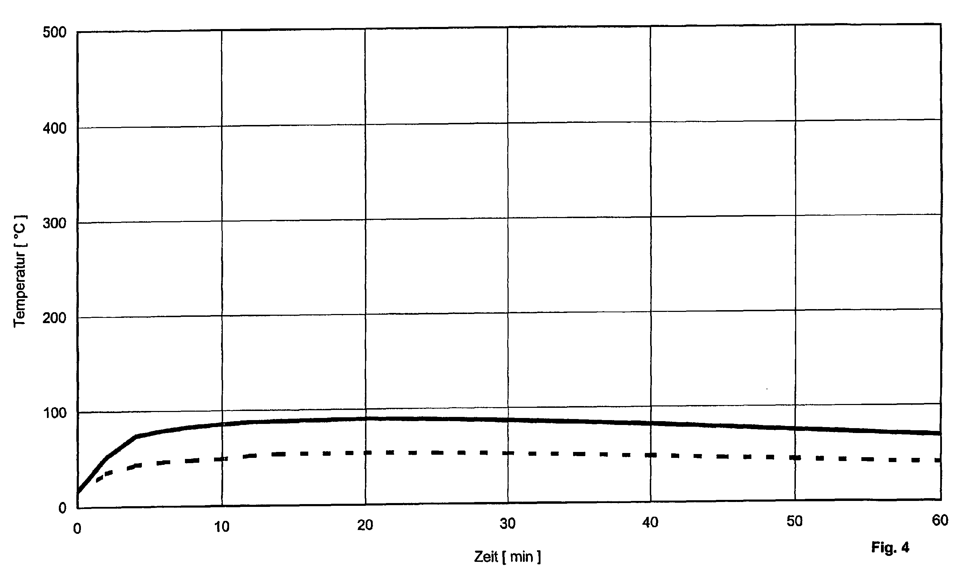

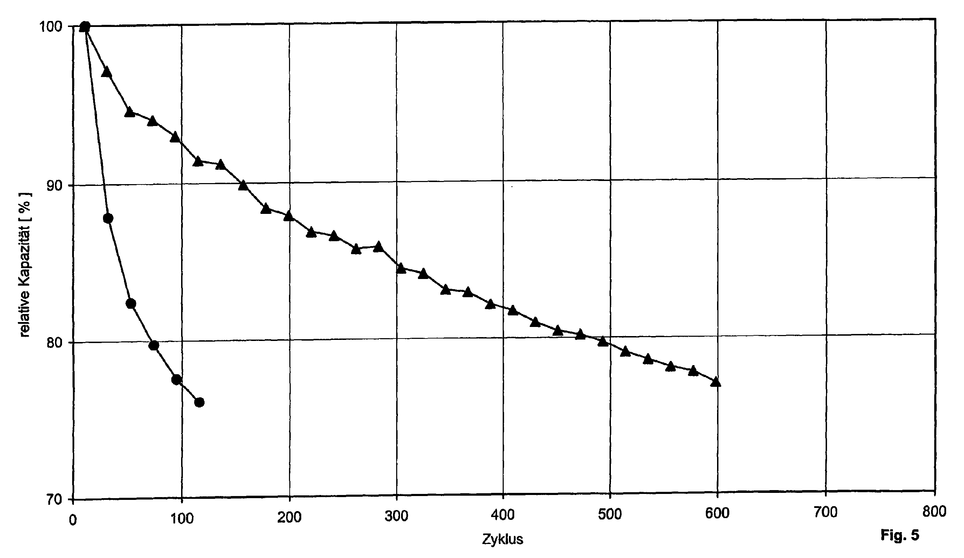

In Lebensdauertests an mehreren Zellen konnte nachgewiesen werden, daß die Wachsbeschichtung keinen negativen Einfluß auf die Lebensdauer der Zelle hat (Figur 5). Im Sicherheitsversuch (externer Kurzschluß einer geladenen Zelle) verhindert die Beschichtung das Öffnen der Zelle und die thermische Eskalation (Figur 4).

### Vergleichsbeispiel 1

Eine gleichartige Zelle wurde mit Elektroden ohne Wachs gefertigt, wobei zwei Lagen eines kommerziellen Polypropylen/Polyethylen/Polypropylen (PP/PE/PP)-Shutdown-Folienseparators (Celgard 2300, Hoechst Celanese Corp.) zur elektrischen Isolierung der Elektroden gegeneinander verwendet wurde. Beide Zellen zeigen nahezu identisches Verhalten und Leistungsfähigkeit im normalen Betrieb. Zur Überprüfung der Funktionalität des Shutdown-Mechanismus wurde mit beiden Zellen ein Sicherheitsversuch durchgeführt. Hierbei wird die zu 100% geladene Zelle einem niederohmigen externen Kurzschluß für 90 min ausgesetzt, wobei der externe Kurzschlußwiderstand kleiner oder gleich dem internen Zellenwiderstand ist.

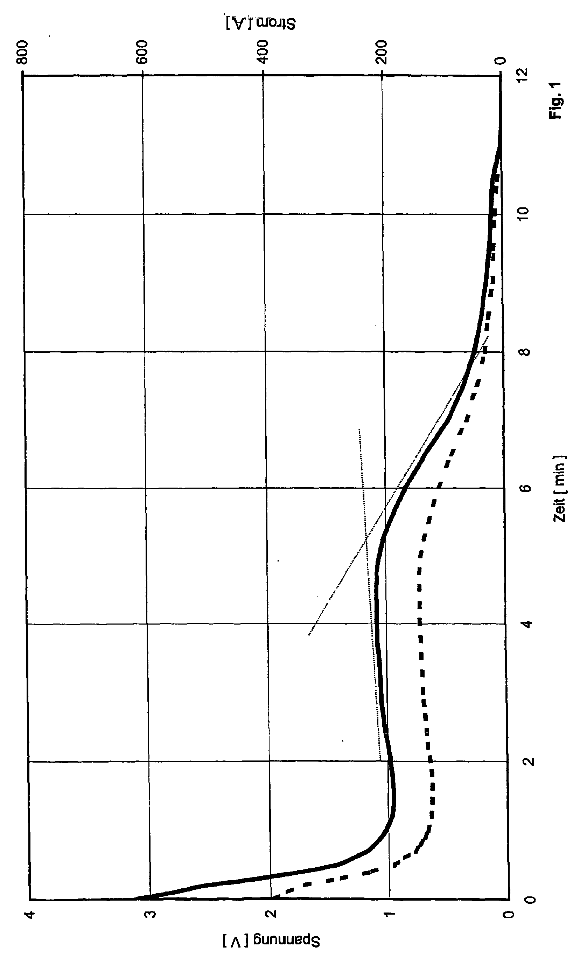

Wie Figur 1 zeigt, tritt der Shutdown-Effekt bei der Zelle mit dem kommerziellen Shutdown-Separator nach etwa 5 min ein.

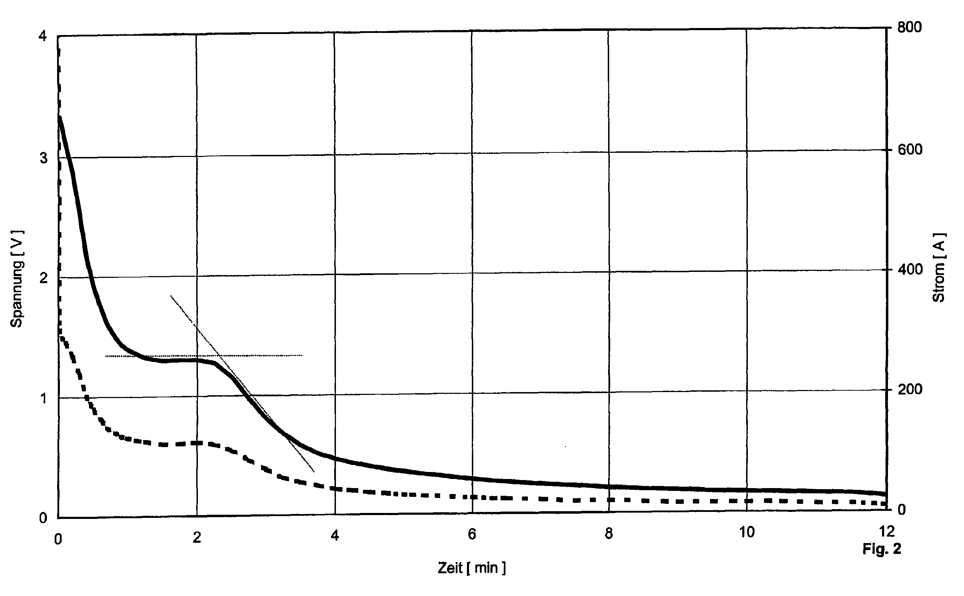

Der Shutdown-Effekt tritt bei der Zelle mit den erfindungsgemäß beschichteten Elektroden, wie Figur 2 zeigt, bereits nach etwa 2 min ein.

Die Shutdown-Rate beträgt bei der Zelle mit dem kommerziellen Shutdown-Separator 32% pro Minute, bezogen auf den Stromwert zu Beginn des Shutdown.

Die Shutdown-Rate beträgt bei der Zelle mit den erfindungsgemäß wachsbeschichteten Elektroden 61% pro Minute, bezogen auf den Stromwert zu Beginn des Shutdown.

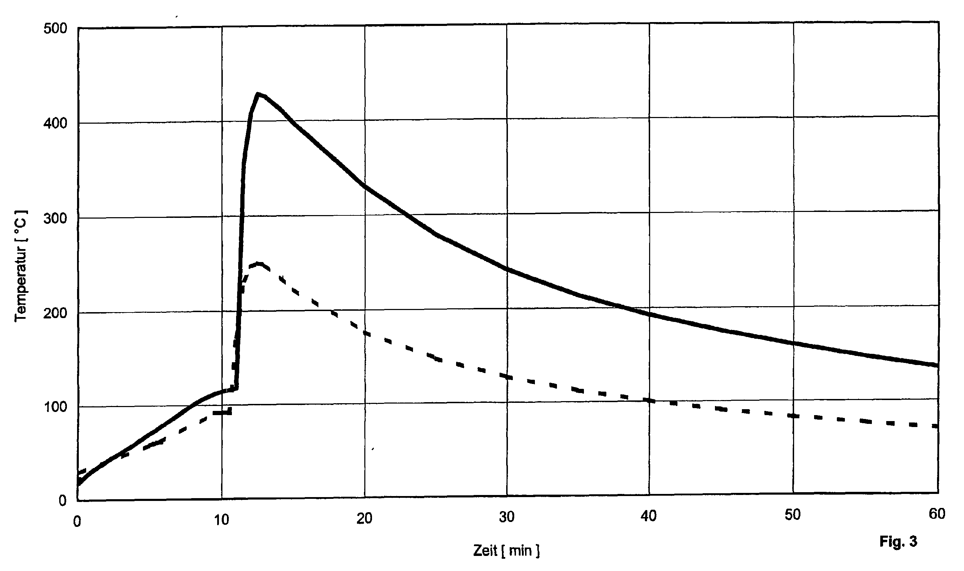

Nach ca. 11 Minuten setzt bei der Zelle mit dem kommerziellen Shutdown-Separator, wie die Figur 3 zeigt, die spontane Freisetzung der elektrischen Energie ein, gekennzeichnet durch den Einbruch von Strom (durchgezogene Linie) und Spannung (gestrichelte Linie).

Bei der Zelle mit den erfindungsgemäß wachsbeschichteten Elektroden tritt bis zum Ende des Versuches (90 min), wie Figur 4 zeigt, keine spontane Freisetzung der elektrischen Energie ein.

Die spontane Freisetzung der elektrischen Energie bei der Zelle mit dem kommerziellen Shutdown-Separator führt, wie Figur 3 zeigt, zu Temperaturen auf der Oberfläche des Zellengefäßes von über 400°C. Das Sicherheitsventil der Zelle öffnet sich und läßt Elektrolytdämpfe und Reaktionsprodukte entweichen.

Die Zelle mit den erfindungsgemäß wachsbeschichteten Elektroden erwärmt sich im Laufe des Versuches auf maximal 90°C (Figur 4). Ein Öffnen des Sicherheitsventiles und das Abblasen von Zelleninhaltsstoffen wird verhindert.

### Vergleichsbeispiel 2

Eine gleichartige Zelle wurde mit einem Wachs beschichteten Separator gefertigt. Ein handelsüblicher Polypropylenseparator wurde dazu in eine Lösung von 30 g eines Acrylatbindemittels (Gelva - 2480, der Fa. Monsanto), 180 g Polyethylenwachs (Polywax - 655 T10, der Fa. Petrolite) im Lösemittelgemisch von 760 g Aceton und 40 g Ethanol getaucht, so daß ca. 1,0 mg/cm² Separatorfläche aufgebracht wurden. Während die Vergleichszelle gemäß Vergleichbeispiel 2 nur eine Zyklenlebensdauer von etwa 80 Zyklen bis zu einer relativen Kapazität von 80 % besitzt, erreicht die erfindungsgemäße Zelle, wie Figur 5 zeigt, etwa 480 Vollzyklen bis zu einem Abfall der relativen Kapazität auf 80 % der Ausgangskapazität.

## Patentansprüche

1. Verfahren zur Herstellung einer sekundären Lithium-Zelle, die mindestens eine Lithium zyklierende negative Elektrode, mindestens eine Lithium interkalierende positive Elektrode, mindestens einen zwischen positiver und negativer Elektrode angeordneten Separator sowie einen nichtwässrigen, Lithiumionen leitenden Elektroyten aufweist, **dadurch gekennzeichnet, dass** die Oberfläche wenigstens einer der Elektroden und/oder des Separators aus einer Pulverschicht aus im Elektrolyten unlöslichen Wachsteilchen gebildet wird, indem die Wachsteilchen mittels elektrostatischer Pulverbeschichtung so aufgesprüht werden, dass die Pulverteilchen unmittelbar an der Oberfläche anhaften und die für den Ionentransport notwendige Porosität der Elektroden und/oder des Separators nicht merklich einschränken, wobei Wachsteilchen mit einer Schmelztemperatur von 50 bis 150° C und einer mittleren Teilchengröße von 6 bis 20 µm und eine Wachsmenge zwischen 0,5 und 2,5 mg/cm² Elektrodenfläche verwendet werden.

2. Verfahren nach Anspruch 1, **dadurch gekennzeichnet, dass** als im Elektrolyt unlösliches Wachs ein Gemisch von Wachsen eingesetzt wird, wobei der niederigschmelzende Anteil eine Schmelztemperatur von 60 bis 90°C besitzt.

3. Verfahren nach Anspruch 1 und/oder Anspruch 2, **dadurch gekennzeichnet, dass** die Wachsteilchen auf den Oberflächen der Elektroden und/oder des Separators durch Lagerung bei der Erweichungstemperatur des niedrigschmelzenden Anteils angesintert werden.

4. Verfahren nach einem oder mehreren der Ansprüche 1 bis 3, **dadurch gekennzeichnet, dass** als im Elektrolyt unlösliches Wachs ein Polyolefinwachs eingesetzt wird.

5. Verfahren nach Anspruch 4, **dadurch gekennzeichnet, dass** als Polyolefinwachs ein Polyethylenwachs eingesetzt wird

6. Sekundäre Lithium-Zelle, die mindestens eine Lithium zyklisierende negative Elektrode, mindestens eine Lithium interkalierende positive Elektrode, mindestens einen zwischen positiver und negativer Elektrode angeordneten Separator sowie einen nichtwässrigen, Lithiumionen leitenden Elektrolyten aufweist, **dadurch gekennzeichnet, dass** die Oberfläche wenigstens einer der Elektroden eine aus im Elektrolyten unlöslichen Wachsteilchen gebildete Pulverschicht aufweist, die mittels elektrostatischer Pulverbeschichtung so aufgebracht ist, dass die Pulverteilchen unmittelbar an der Oberfläche anhaften und die für den Ionentransport notwendige Porosität der Elektroden nicht merklich einschränken, wobei die Wachsteilchen eine Schmelztemperatur von 50 bis 150°C und eine mittlere Teilchengröße von 6 bis 20 µm besitzen und die Wachsmenge zwischen 0,5 und 2,5 mg/cm² Elektrodenfläche beträgt.

7. Sekundäre Lithium-Zelle nach Anspruch6, **dadurch gekennzeichnet, dass** das im Elektrolyt unlösliche Wachs ein Gemisch von Wachsen ist, wobei der niedrigschmelzende Anteil eine Schmelztemperatur von 60 bis 90°C aufweist.

8. Sekundäre Lithium-Zelle nach Anspruch 6 oder 7, **dadurch gekennzeichnet, dass** die Wachsteilchen auf den Oberflächen der Elektroden und/oder des Separators durch Lagerung bei der Erweichungstemperatur des niedrig schmelzenden Anteils angesintert werden.

9. Sekundäre Lithium-Zelle nach einem der vorstehenden Ansprüche, **dadurch gekennzeichnet, dass** das im Elektrolyt unlösliche Wachs ein Polyolefinwachs ist.

10. Sekundäre Lithium-Zelle nach Anspruch 9, **dadurch gekennzeichnet, dass** das Polyolefinwachs ein Polyethylenwachs ist.

## Claims

1. Method for producing a secondary lithium cell which has at least one lithium-cycling negative electrode, at least one lithium-intercalating positive electrode, at least one separator disposed between the positive and the negative electrode, and a nonaqueous lithium ion-conducting electrolyte, **characterized in that** the surface of at least one of the electrodes and/or of the separator is formed from a powder layer of wax particles which are insoluble in the electrolyte by the wax particles being sprayed on by means of electrostatic powder coating in such a way that the powder particles adhere directly to the surface and do not significantly restrict the porosity of the electrodes and/or of the separator which is required for ion transport, wax particles having a melting temperature of from 50 to 150°C and a mean particle size of from 6 to 20 µm and an amount of wax of between 0.5 and 2.5 mg/cm² of electrode area being used.

2. Method according to Claim 1, **characterized in that** the electrolyte-insoluble wax used is a mixture of waxes, the low-melting fraction having a melting temperature of from 60 to 90°C.

3. Method according to Claim 1 and/or Claim 2, **characterized in that** the wax particles are sintered onto the surfaces of the electrodes and/or the separator by storage at the softening temperature of the low-melting fraction.

4. Method according to one or more of Claims 1 to 3, **characterized in that** the electrolyte-insoluble wax used is a polyolefin wax.

5. Method according to Claim 4, **characterized in that** the polyolefin wax used is a polyethylene wax.

6. Secondary lithium cell which has at least one lithium-cycling negative electrode, at least one lithium-intercalating positive electrode, at least one separator disposed between the positive and the negative electrode, and a nonaqueous lithium ion-conducting electrolyte, **characterized in that** the surface of at least one of the electrodes has a powder layer which is formed from wax particles which are insoluble in the electrolyte and which is applied by means of electrostatic powder coating in such a way that the powder particles adhere directly to the surface and do not significantly restrict the porosity of the electrodes required for the ion transport, the wax particles having a melting temperature of from 50 to 150°C and a mean particle size of from 6 to 20 µm and the amount of wax being between 0.5 and 2.5 mg/cm² of electrode area.

7. Secondary lithium cell according to Claim 6, **characterized in that** the electrolyte-insoluble wax is a mixture of waxes, the low-melting fraction having a melting temperature of from 60 to 90°C.

8. Secondary lithium cell according to Claim 6 or 7, **characterized in that** the wax particles are sintered onto the surfaces of the electrodes and/or the separator by storage at the softening temperature of the low-melting fraction.

9. Secondary lithium cell according to one of the preceding claims, **characterized in that** the electrolyte-insoluble wax is a polyolefin wax.

10. Secondary lithium cell according to Claim 9, **characterized in that** the polyolefin wax is a polyethylene wax.

## Revendications

1. Procédé de fabrication d'une cellule au lithium secondaire comprenant au moins une électrode négative cyclant du lithium, au moins une électrode positive intercalant du lithium, au moins un séparateur entre l'électrode positive et négative ainsi qu'un électrolyte non aqueux, conduisant les ions de lithium,
**caractérisé en ce que**
la surface d'au moins une des électrodes et/ou du séparateur est formée d'une couche pulvérulente constituée de particules de cire insolubles dans l'électrolyte, en pulvérisant les particules de cire au moyen d'un revêtement pulvérulent électrostatique de sorte que les particules pulvérulentes adhèrent directement à la surface et ne limitent pas de manière notable la porosité nécessaire au transport des ions des électrodes et/ou du séparateur, et en utilisant des particules de cire ayant une température de fusion de 50 à 150°C et une taille de particules moyenne de 6 à 20 µm pour une quantité de cire de 0,5 à 2,5 mg/cm² de surface d'électrode.

2. Procédé selon la revendication 1,
**caractérisé en ce qu'**
on utilise un mélange de cires en tant que cire insoluble dans l'électrolyte, la proportion à faible point de fusion possédant une température de fusion de 60 à 90°C.

3. Procédé selon la revendication 1 et/ou la revendication 2,
**caractérisé en ce que**
les particules de cire sont frittées sur les surfaces des électrodes et/ou du séparateur par dépôt à la température de ramollissement de la proportion à faible point de fusion.

4. Procédé selon l'une quelconque ou plusieurs des revendications 1 à 3,
**caractérisé en ce qu'**
on utilise une cire de polyoléfine en tant que cire insoluble dans l'électrolyte.

5. Procédé selon la revendication 4,
**caractérisé en ce qu'**
on utilise une cire de polyéthylène en tant que cire de polyoléfine.

6. Cellule au lithium secondaire qui présente au moins une électrode négative cyclant du lithium, au moins une électrode positive intercalant du lithium, au moins un séparateur entre l'électrode positive et négative ainsi qu'un électrolyte non aqueux, conduisant les ions de lithium,
**caractérisé en ce que**
la surface d'au moins une des électrodes présente une couche pulvérulente formée de particules de cire insolubles dans l'électrolyte appliquée au moyen d'un revêtement pulvérulent électrostatique de sorte que les particules pulvérulentes adhèrent directement à la surface et ne limitent pas de manière notable la porosité nécessaire au transport des ions des électrodes, les particules de cire possédant une température de fusion de 50 à 150°C et une taille de particules moyenne de 6 à 20 µm pour une quantité de cire de 0,5 à 2,5 mg/cm² de surface d'électrode.

7. Elément secondaire au lithium selon la revendication 6,
**caractérisé en ce qu'**
un mélange de cires est la cire insoluble dans l'électrolyte, la proportion à faible point de fusion présentant une température de fusion de 60 à 90°C.

8. Elément secondaire au lithium selon la revendication 6 ou 7,
**caractérisé en ce que**
les particules de cire sont frittées sur les surfaces des électrodes et/ou du séparateur par dépôt à la température de ramollissement de la proportion à faible point de fusion.

9. Elément secondaire au lithium selon l'une quelconque des revendications précédentes,
**caractérisé en ce que**
la cire insoluble dans l'électrolyte est une cire de polyoléfine.

10. Elément secondaire au lithium selon la revendication 9,
**caractérisé en ce que**
la cire de polyoléfine est une cire de polyéthylène.
